# EUROPÄISCHE PATENTSCHRIFT

(11) **EP 0 669 245 B1**
(45) Veröffentlichungstag und Bekanntmachung des Hinweises auf die Patenterteilung: **16.10.1996**
(21) Anmeldenummer: 95100782.2
(22) Anmeldetag: 20.01.1995
(51) Int. Cl.: B62D 31/00, B62D 21/15, B62D 25/14

(54) **Zweisitziger Kleinwagen**
Compact car with two seats
Minicar avec deux sièges

(30) Priorität: 28.02.1994 DE 4406448
(43) Veröffentlichungstag der Anmeldung: 30.08.1995
(73) Patentinhaber: MERCEDES-BENZ AG, 70327 Stuttgart (DE)
(72) Erfinder: Sacco, Bruno, D-71067 Sindelfingen (DE); Tomforde, Johann, D-71069 Sindelfingen (DE); Reichel, Anton, D-71254 Ditzingen (DE); Steinle, Gerhard, Newport Beach, CA 92663 (US); Klein, Berthold, D-71277 Rutesheim (DE); Slaughter, David, San Diego, CA 92102 (US); Ma, Mike, Rosemead, CA 91770 (US)

(56) Entgegenhaltungen:
- EP-A- 0 547 583
- DE-U- 9 312 073
- GB-A- 841 237
- GB-A- 1 187 883
- GB-A- 2 128 562

## Beschreibung

Kleinfahrzeuge wiesen bisher entweder sehr schlechte Werte bezüglich Front-, Heck- und Seitencrashverhalten bei gleichzeitig beengendem Raumgefühl für die Insassen auf oder aber größere Außendimensionen bei gleichen kleinen Innenräumen - also einem schlechten Raumnutzungskoeffizienten -, also wiederum nicht die Vorteile einer deutlichen Verkehrsflächenreduzierung.

Der vorliegenden Erfindung liegt daher die Aufgabe zugrunde, ein Konzept für einen zweisitzigen Kleinwagen aufzuzeigen, der bei minimalem Verkehrsflächenbedarf ohne größeren Konstruktions- und gewichtserhöhendem Materialaufwand größtmögliche Sicherheit für die Insassen bietet.

Diese Aufgabe wird erfindungsgemäß durch die Kombination der folgenden Merkmale gelöst:
a) der Beifahrersitz ist gegenüber dem daneben liegenden Fahrersitz um etwa bis zu einer halben Sitzkissentiefe nach hinten längsversetzt angeordnet;
b) eine vor den Sitzen angeordnete Armaturentafel ist mit ihrer den Sitzen zugewendeten Seite in ihrem beifahrerseitigen Bereich so weit nach hinten gezogen, daß der Abstand zwischen Armaturentafel und Sitzvorderkante für Fahrer- und Beifahrersitz etwa gleich ist;
c) äußere seitliche Längsträger sind im Bereich der Hinterachse in einer Abkröpfung bis mindestens auf Höhe der Reifenoberkante hochgezogen, derart, daß zumindest der Beifahrersitz gegen Seitenaufprallkräfte geschützt ist; und
d) die Karosserie des Fahrzeugs weist praktisch keinen Überhang über die Hinterräder auf, so daß bei einem Heckaufprall die Hinterachse zur Stoßkraftaufnahme herangezogen ist, bevor eine stärkere Heckintrusion erfolgt.

Das Merkmal a) bewirkt, daß durch die um bis zu ca. einer halben Sitzkissentiefe längs versetzte Sitzanordnung von Fahrer zu Beifahrer die Sitze näher zur Fahrzeugmitte rücken können, ohne daß die Insassen mit den Schultern aneinanderreiben, daß das Raumgefühl für beide Insassen sowie die Rundumsicht für den Fahrer wesentlich besser werden, und daß trotz der geringen Karosseriebreite ein großer Abstand zwischen Insassen und Außenkante Fahrzeug erreicht wird, was sowohl sicherheitstechnisch als auch psychologisch wichtig ist.

Durch Merkmal b) wird erreicht, daß trotz der Sitzanordnung nach Merkmal a) der Abstand vom Beifahrersitz zur Armaturentafel weitgehend gleich bleibt bzw. maximal so differiert, daß auch hier ein Beifahrerairbag mit normalem Füllvolumen Verwendung finden kann.

Merkmal c) bewirkt im Zusammenhang mit Merkmal a), daß durch die ohnehin erforderlichen Längsträger ein wirksamer Seitenaufprallschutz im Bereich des nach hinten versetzten Beifahrersitzes ohne weiteren konstruktiven Aufwand geschaffen ist.

Merkmal d) schließlich bewirkt - gleichfalls ohne gewichtserhöhenden Mehraufwand- einen wirksamen Schutz der Fahrzeuginsassen bei einem Heckaufprall, was noch verstärkt wird durch die spezielle Anordnung eines ohnehin erforderlichen Querträgers nach Anspruch 2.

Der Gegenstand der Erfindung soll im folgenden anhand eines in der Zeichnung schematisch dargestellten Ausführungsbeispiels näher erläutert werden.

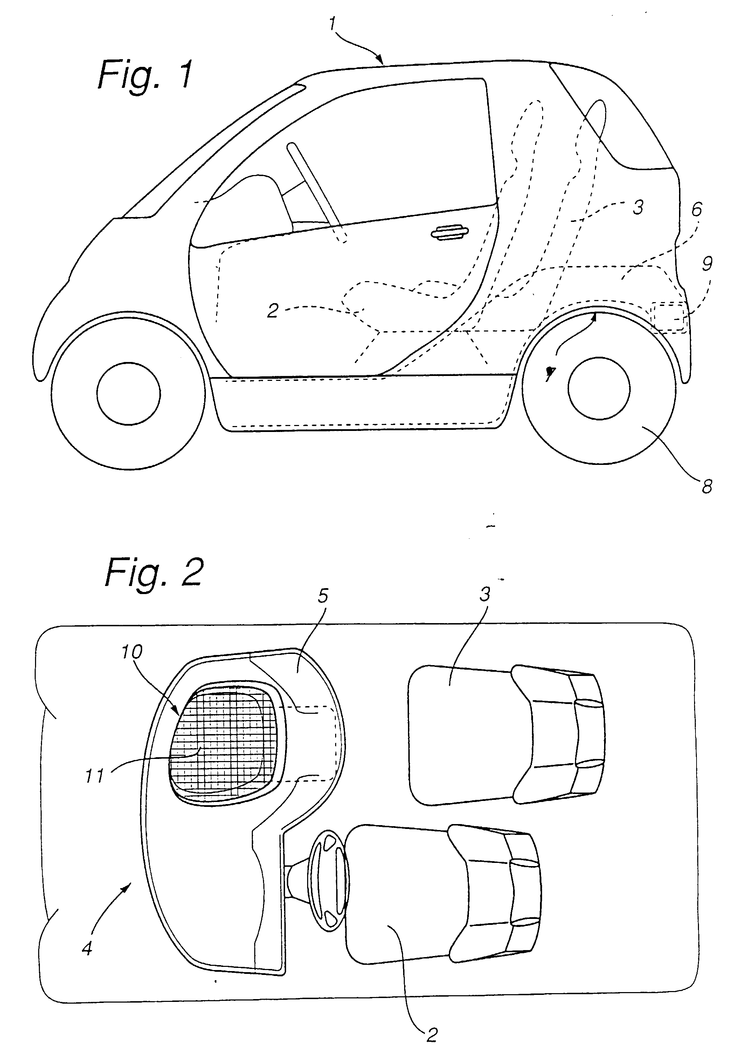

In der Zeichnung zeigen
- Fig. 1: eine Seitenansicht eines erfindungsgemäßen Kleinwagens, und
- Fig. 2: eine Draufsicht auf das Fahrzeug.

Der in der Zeichnung schematisch dargestellte Kleinwagen 1 weist einen Fahrersitz 2 und einen Beifahrersitz 3 auf, wobei der Beifahrersitz 3 gegenüber dem Fahrersitz 2 um etwa eine halbe Sitzkissentiefe nach hinten längsversetzt angeordnet ist. Etwa entsprechend diesem Längsversatz ist auch eine vor den Sitzen angeordnete Armaturentafel 4 in ihrem beifahrerseitigen Bereich 5 durch eine asymmetrische Ausbildung zum Beifahrersitz 3 nach hinten gezogen, wodurch auch hier die Verwendung eines Airbags normaler Größe möglich ist.

Um einen wirksamen Seitenaufprallschutz insbesondere für den Beifahrersitz 3 zu schaffen, sind äußere seitliche Längsträger 6 im Bereich der Hinterachse in einer Abkröpfung bis mindestens auf Höhe der Reifenoberkante 7 hochgezogen, so daß der untere Teil des Beifahrersitzes 3 praktisch im "Windschatten" der Längsträger 6 liegt.

Um starken Heckintrusionen bei einem Unfall vorzubeugen, sind zwei Maßnahmen vorgesehen.

Zum einen weist die Karosserie des Fahrzeugs 1 praktisch keinen Übergang über die Hinterräder 8 auf, so daß bei einem Heckaufprall die Hinterachse direkt zur Stoßaufnahme herangezogen wird.

Zum anderen ist etwa auf Scheitelhöhe der Hinterräder 8 ein steifer Querträger 9 angeordnet, der mit seiner Hinterkante in etwa mit der darunter liegenden äußeren Reifenkontur fluchtet.

Schließlich ist noch der beifahrerseitige Bereich 5 der Armaturentafel 4 von Interesse. Dort ist der durch die spezielle Ausbildung des Bereichs 5 gewonnene Freiraum als von oben nutzbarer Stauraum 10 ausgebildet, dessen Boden durch ein gegenüber der Oberkante vertieft angeordnetes, aufgespanntes Netz 11 gebildet ist.

## Patentansprüche

1. Zweisitziger Kleinwagen mit der Kombination der folgenden Merkmale:
a) der Beifahrersitz (3) ist gegenüber dem daneben liegenden Fahrersitz (2) um etwa bis zu einer halben Sitzkissentiefe nach hinten längsversetzt angeordnet;
b) eine vor den Sitzen angeordnete Armaturentafel (4) ist mit ihrer den Sitzen zugewendeten Seite in ihrem beifahrerseitigen Bereich (5) so weit nach hinten gezogen, daß der Abstand zwischen Armaturentafel (4) und Sitzvorderkante für Fahrer- und Beifahrersitz (2, 3) etwa gleich ist;
c) äußere seitliche Längsträger (6) sind im Bereich der Hinterachse in einer Abkröpfung bis mindestens auf Höhe der Reifenoberkante (7) hochgezogen, derart, daß zumindest der Beifahrersitz (3) gegen Seitenaufprallkräfte geschützt ist; und
d) die Karosserie des Fahrzeugs weist praktisch keinen Überhang über die Hinterräder (8) auf, so daß bei einem Heckaufprall die Hinterachse zur Stoßkraftaufnahme herangezogen ist, bevor eine stärkere Heckintrusion erfolgt.

2. Kleinwagen nach Anspruch 1,
**dadurch gekennzeichnet,**
daß etwa auf Scheitelhöhe der Hinterräder (8) ein steifer Querträger (9) angeordnet ist, der mit seiner Hinterkante etwa mit der darunter liegenden äußersten Reifenkontur fluchtet.

3. Kleinwagen nach Anspruch 1,
**dadurch gekennzeichnet,**
daß innerhalb des beifahrerseitigen Bereichs (5) der Armaturentafel (4) gewonnener Freiraum als von oben und/oder unten nutzbarer Stauraum (10) ausgebildet ist.

4. Kleinwagen nach Anspruch 3,
**dadurch gekennzeichnet,**
daß der Boden des von oben zugänglichen Steuerraums (10) von einem aufgespannten Netz (11) gebildet ist.

## Claims

1. Small two-seater car, having a combination of the following features:
a) the passenger seat (3) is arranged to be longitudinally offset to the rear, by approximately half the depth of a seat cushion, with respect to the driver's seat (2) located beside it;
b) a dashboard (4), arranged in front of the seats, extends back, with its side which is directed towards the seats, in its passenger-side region (5) to such an extent that the distance between dashboard (4) and seat front edge is approximately the same for the driver's seat and the passenger seat (2, 3);
c) in the region of the rear axle, outer frame side members (6) extend, in a bent-off section, up to at least the level of the tyre upper edge (7), such that at least the passenger seat (3) is protected with respect to side impact forces; and
d) the bodywork of the vehicle has virtually no overhang beyond the rear wheels (8), with the result that, in the event of a rear impact, the rear axle is used to absorb impact forces before more pronounced intrusion to the rear takes place.

2. Small car according to Claim 1, characterized in that arranged approximately level with the top of the rear wheels (8) is a rigid frame crossmember (9) which, with its rear edge, is approximately in alignment with the outermost tyre contour located therebeneath.

3. Small car according to Claim 1, characterized in that, within the passenger-side region (5) of the dashboard (4), the free space obtained is designed as a stowage space (10) which can be reached from above and/or beneath.

4. Small car according to Claim 3, characterized in that the bottom of the stowage space (10) which is accessible from above is formed by a stretched-over netting (11).

## Revendications

1. Petite voiture à deux sièges, présentant la combinaison des caractéristiques suivantes :
a) le siège (3) du passager est disposé de manière à être déplaçable longitudinalement vers l'arrière, par rapport au siège (2) du conducteur, situé à côté, et ce approximativement jusqu'à la moitié de la profondeur du coussin du siège ;
b) un tableau de bord (4), disposé en avant des sièges, s'étend vers l'arrière, par son côté tourné vers les sièges, dans sa partie (5) située du côté du passager, au point que la distance entre le tableau de bord (4) et le bord avant du siège (2,3) pour le conducteur ou le passager est approximativement la même ;
c) des longerons latéraux extérieurs (6) sont relevés, au niveau d'une partie coudée, au moins jusqu'au niveau du bord supérieur (7) du pneumatique de telle sorte qu'au moins le siège (3) du passager soit protégé vis-à-vis de forces de choc latérales ; et
d) la carrosserie du véhicule ne possède pratiquement aucun porte-à-faux par rapport aux roues arrière (8) de sorte que, lors d'un choc arrière, l'essieu arrière est utilisé pour absorber la force de choc avant qu'il ne se produise une pénétration arrière plus importante.

2. Petite voiture selon la revendication 1, caractérisée en ce qu'approximativement à la hauteur du sommet des roues arrière (8) est disposée une traverse de support rigide (9), qui est alignée, par son bord arrière, approximativement avec le contour le plus extérieur, situé au-dessous, du pneumatique.

3. Petite voiture selon la revendication 1, caractérisée en ce que l'espace libre obtenu à l'intérieur de la partie (5), côté passager, du tableau de bord (4) est agencé sous la forme d'un espace de rangement (10) utilisable par le haut et/ou par le bas.

4. Petite voiture selon la revendication 3, caractérisée en ce que le fond de l'espace de rangement (10), accessible à partir du haut, est formé par un filet tendu (11).
